# EUROPÄISCHE PATENTSCHRIFT

(11) **EP 3 098 072 B1**
(45) Veröffentlichungstag und Bekanntmachung des Hinweises auf die Patenterteilung: **25.12.2019**
(21) Anmeldenummer: 16159712.5
(22) Anmeldetag: 10.03.2016
(51) Int. Cl.: B32B 37/12, B32B 37/00, B27N 3/00, B32B 37/06

(54) **VERFAHREN ZUR HERSTELLUNG VON LAMINATEN**
METHOD FOR THE PRODUCTION OF LAMINATES
PROCEDE DE FABRICATION DE LAMINES

(30) Priorität: 10.03.2015 DE 102015103514
(43) Veröffentlichungstag der Anmeldung: 30.11.2016
(73) Patentinhaber: Fritz Egger GmbH & Co. OG, 6380 St. Johann in Tirol (AT)
(72) Erfinder: Mitter, Roland, 3123 Großrust (AT)
(74) Vertreter: Cohausz & Florack

(56) Entgegenhaltungen:
- EP-A2- 0 427 058
- WO-A1-2014/109697
- AT-B- 322 068
- DE-A1-102004 034 528

## Beschreibung

Die vorliegende Erfindung betrifft ein Verfahren zur Herstellung von Laminaten sowie die Verwendung eines Säure-freisetzenden Härters für Kunstharze zur Herstellung solcher Laminate. Die Erfindung betrifft ferner mit diesem Verfahren hergestellte Laminate.

Wenn hier oder an anderer Stelle von Laminat die Rede ist, so kann das insbesondere einen Werkstoff bedeuten, der aus zwei oder mehreren flächig miteinander verklebten Schichten besteht. Diese Schichten können aus gleichen oder unterschiedlichen Materialien bestehen.

Laminate kommen im Alltag an vielen Stellen zum Einsatz. Sehr bekannt ist der Einsatz von Laminaten für Fußböden. Aber auch in der Möbelherstellung werden Laminate verwendet. Zudem können Laminate in der Herstellung von Einrichtungsgegenständen für den Innen- und/oder Außenbereich eingesetzt werden. Der Grund für die vielfältigen Einsatzmöglichkeiten für Laminate liegt in der hohen Flexibilität der Zusammensetzung von Laminaten. Daher können die Eigenschaften von Laminaten für den jeweiligen Einsatzbereich abgestimmt werden. So bieten Laminate im Hinblick auf ihre optische Gestaltung eine große Freiheit. Auch die Beständigkeit, insbesondere die Kratzfestigkeit, kann durch den Einsatz geeigneter Materialien in der Laminatherstellung gezielt beeinflusst werden.

Typischerweise bestehen Laminate aus einer Trägerschicht, auf die ein Dekorpapier aufgebracht ist. Das Dekorpapier kann bedruckt sein, wodurch die optischen Gestaltungsmöglichkeiten von Laminaten eröffnet werden. Die bedruckte Oberfläche des Dekorpapiers bestimmt dabei wesentlich das Aussehen des Laminats.

Beispielsweise kann durch einen geeigneten Aufdruck auf dem Dekorpapier eine Holzoberfläche imitiert werden.

Außer den üblichen, bereits erwähnten Bestandteilen der Trägerschicht und des Dekorpapiers können Laminate noch weitere Bestandteile enthalten. Zwischen der Trägerschicht und dem Dekorpapier können ein oder mehrere Basispapiere enthalten sein. Als Basispapiere werden oft sogenannte Underlays eingesetzt. Underlays können als Barriere zwischen der Trägerschicht und dem Dekorpapier wirken und eine chemische Beeinflussung zwischen den Harzbestandteilen von Trägerschicht und Dekorpapier verhindern. Basispapiere können auch zur Erzielung anderer Effekte eingesetzt werden. Beispielsweise kann der Einsatz eines Basispapiers erwünschte optische Effekte hervorrufen. Der Einsatz von Basispapieren kann aber auch aus verfahrenstechnischen Gründen günstig sein.

Zusätzlich können Laminate auch sogenannte Overlays enthalten. Overlays sind üblicherweise im Wesentlichen transparente Papiere mit einem hohen Harzaufnahmevermögen. Overlays können zum Schutz des Druckbildes von bedruckten Dekorpapieren verwendet werden. Sie können auch zur Verbesserung der Abriebbeständigkeit eingesetzt werden. Normalerweise werden Overlays als oberste Schicht auf das Laminat aufgebracht. Einen Spezialfall der Overlays bilden sogenannte Flüssigoverlays. Diese können aus einem Harz, beispielsweise einem Aminoplastharz, bestehen, das Partikel, insbesondere abrasive Partikel, enthalten kann. Flüssigoverlays werden üblicherweise als oberste Schicht auf das Laminat aufgebracht.

Ein weiterer wichtiger Bestandteil von Laminaten sind Harze. Insbesondere Kunstharze haben sich als besonders praxisgerecht im Zusammenhang mit der Laminatherstellung erwiesen. Üblicherweise enthält ein Laminat mindestens ein Kunstharz. Ein Laminat kann jedoch auch mehrere, insbesondere verschiedene, Kunstharze enthalten. Kunstharze werden in Laminaten normalerweise dazu verwendet, die einzelnen Schichten miteinander zu verbinden. Beispielsweise können dickere Schichten eines Laminats ein erstes Kunstharz enthalten. Durch Verkleben einer dickeren Schicht, die bereits ein erstes Kunstharz enthält, mit mindestens einer weiteren Schicht, kann ein Laminat durch Verwendung eines weiteren, vom ersten Kunstharz verschiedenen Kunstharzes, mehr als ein Kunstharz enthalten.

Kunstharze sind dem Fachmann grundsätzlich bekannt. Kunstharze sind beispielsweise in Römpps Chemie-Lexikon, 7. Auflage, Frankh'sche Verlagshandlung Stuttgart, 1973, Seite 1893 beschrieben. Eine speziell für Laminate wichtige Gruppe der Kunstharze stellen Kondensatharze dar. Diese härten durch Kondensationsreaktionen aus, bei denen oft Wasser abgespalten wird. Zu den Kondensatharzen zählen zum Beispiel Phenolformaldehydharze und Aminoplastharze.

Die Aushärtung von Kunstharzen, insbesondere von Kondensatharzen, kann zum Beispiel durch Zusatz saurer Katalysatoren erfolgen. Dabei kommen im Normalfall organische Säuren wie Zitronensäure und Maleinsäure, anorganische Säuren wie Schwefelsäure und Phosphorsäure, Salze, die in Wasser sauer reagieren wie Aluminiumchlorid und Aluminiumnitrat (auch als saure Salze bezeichnet), Salze, die durch Reaktion mit Komponenten des Kunstharzes, vorzugsweise mit Formaldehyd, eine Säure generieren (auch als Säure generierende Salze bezeichnet) wie Ammoniumphosphat, Ammoniumsulfat und Ammoniumchlorid, und Mischungen der vorgenannten Substanzen zum Einsatz.

Zur Herstellung von Laminaten kann von einer Trägerschicht ausgegangen werden, auf die die weiteren Schichten aufgebracht werden. Auf diese Weise wird zunächst eine Schichtung erhalten. Eine Schichtung kann aus zwei oder mehr Schichten bestehen. Die Schichten können gleich oder voneinander verschieden sein. Benachbarte Schichten können in einer Schichtung insbesondere unmittelbaren Kontakt haben. Die vorhandenen Kanten der einzelnen Schichten können in einer Schichtung auf eine bestimmte Art, beispielsweise parallel zueinander, ausgerichtet sein. Üblicherweise sind die Bestandteile einer Schichtung noch nicht miteinander verpresst. Im weiteren Verfahren kann die Schichtung anschließend unter Druck- und/oder unter Temperatureinwirkung zu einem Laminat verklebt werden.

Die Schichten, die Bestandteil der Schichtung werden sollen, können vor dem Auftragen auf die Trägerschicht mit einer Zusammensetzung, die ein Kunstharz enthält, getränkt werden. Derartige getränkte Schichten können insbesondere auch als Imprägnate bezeichnet werden. Bevorzugt werden Imprägnate von Papieren wie Overlays, Underlays und/oder Dekorpapieren durch Tränken mit einer Zusammensetzung, die ein Kunstharz enthält, erzeugt.

Als Trägerschicht kommen verschiedene Werkstoffe in Frage. Häufig werden Holzwerkstoffe eingesetzt. Beispiele für Holzwerkstoffe sind Spanplatten, Holzfaserplatten und Grobspanplatten ("oriented strand boards", OSB-Platten). Es können allerdings auch andere Werkstoffe, wie zum Beispiel Werkstoffe, die einen Kunststoff und/oder ein Kunstharz enthalten, eingesetzt werden.

Auf dem Gebiet der für die Laminatherstellung wichtigen Kunstharze ist intensiv geforscht worden.

Die WO 2002/068178 A2 beschreibt ein Verfahren zum Verkleben von Laminaten mit einem Aminoplastharz, in dem das Aminoplastharz und der Härter, der eine Säure, ein saures Salz und/oder ein Säure generierendes Salz enthält, separat auf die zu verklebenden Teile aufgetragen werden.

Die WO 2005/030895 A1 beschreibt Bindemittelsysteme, die neben Aminoplastharzen und N-funktionalisierten Copolymeren auch mindestens eine Säure, ein saures Salz und/oder ein Säure generierendes Salz enthalten.

Weiterhin wird in der EP 427 058 A2 ein Verfahren zur Rollenheißkaschierung von Holzwerkstoffen unter Verwendung einer wässrigen Härtermischung zur Härtung von Aminoplastharzen beschrieben.

Die DE 10 2004 034 528 A1 beschreibt die Verwendung von Melaminharzfolien zum Beschichten von dreidimensional strukturierten Oberflächen, insbesondere von Holzwerkstoffen.

Nachteilig an den im Stand der Technik aufgeführten Härterzusammensetzungen ist zum Einen, dass die Aushärtung des Kunstharzes bei Verwendung von Säuren als Härter schwer zu kontrollieren ist, da die Aushärtung schon bei Zugabe der Säure beginnen kann. Gleiches gilt für den Einsatz von sauren Salzen, bei denen die Aushärtung ebenfalls mit der Zugabe der sauren Salze beginnen kann. Der Nachteil der Säure generierenden Salze liegt darin, dass diese Salze üblicherweise freies Formaldehyd benötigen, um beispielweise mit den Ammoniumsalzen Säure zu bilden. Insofern muss oftmals mehr Formaldehyd, als für die Aushärtung des Kunstharzes benötigt wird, zugegeben werden. Dieses Formaldehyd ist normalerweise jedoch nicht dauerhaft gebunden und kann nach Beendigung des Herstellungsverfahrens, ebenso wie sonstiges freies Formaldehyd aus dem Kondensatzharz, langsam wieder freigesetzt werden. Die nachträgliche Freisetzung von Formaldehyd ist jedoch unerwünscht. Bestrebungen, den Gehalt an freiem Formaldehyd bei Verwendung der Härterzusammensetzungen aus dem Stand der Technik zu reduzieren, resultierten normalerweise in einer verzögerten Aushärtung des Kunstharzes sowie in geringeren Bindefestigkeiten der verklebten Schichten, was die mechanischen Eigenschaften der Laminate beeinträchtigen kann.

Die im Stand der Technik aufgeführten Verfahren erweisen sich vor allem für solche Trägerschichten als nachteilig, die Wasserdampf schlecht abführen und/oder absorbieren können. Bei Trägerschichten, die Wasserdampf schlecht abführen und/oder absorbieren können, müssen mit den aus dem Stand der Technik bekannten Verfahren beim Pressen normalerweise Presszeiten von 2,5 bis 3,5 Minuten eingehalten werden, um glatte Oberflächen der Laminate zu erhalten. Im Gegensatz dazu kann das Kunstharz typischerweise schneller, zum Beispiel bereits nach 20 Sekunden, ausgehärtet sein. Kürzere Presszeiten führen zu einer Blasenbildung an der Oberfläche der Laminate. Dies ist vermutlich darauf zurückzuführen, dass das im Kunstharz enthaltene Wasser verdampft und nicht entweichen kann. Dem wird normalerweise durch die oben angeführten, längeren Presszeiten entgegengewirkt, wobei eine längere Taktzeit und damit eine geringere Produktivität und somit eine geringere Wirtschaftlichkeit in Kauf genommen wird.

Ausgehend von dem vorstehend erläuterten Stand der Technik bestand eine Aufgabe der Erfindung darin, ein Verfahren bereit zu stellen, das es erlaubt, Laminate mit kürzeren Presszeiten als im Stand der Technik benötigt, herzustellen.

Diese Aufgabe wird erfindungsgemäß durch ein Verfahren gemäß Anspruch 1 sowie ein Laminat gemäß Anspruch 22 und eine Verwendung gemäß Anspruch 23 gelöst.

Vorteilhafte Ausgestaltungen der Erfindung sind in den abhängigen Ansprüchen beschrieben und werden nachfolgend wie der allgemeine Erfindungsgedanke im Einzelnen erläutert.

Das erfindungsgemäße Verfahren zur Herstellung von Laminaten enthaltend mindestens eine Trägerschicht und eine weitere Schicht, umfassend:
a. Herstellen eines Imprägnats durch Tränken eines Basispapiers mit einer Zusammensetzung, die ein Kunstharz enthält,
b. Bereitstellen einer Schichtung umfassend eine Trägerschicht und ein Imprägnat durch Aufbringen des Imprägnats auf die Trägerschicht, und
c. Heißpressen der bereitgestellten Schichtung,
wobei ein Härter für das Kunstharz verwendet wird, der beim Heißpressen durch Hydrolyse mindestens eine Säure freisetzt.

Zur Einteilung von Werkstoffen kann insbesondere die Wasserdampdiffusionswiderstandszahl (µ-Zahl) herangezogen werden. Die Wasserdampfdiffusionswiderstandszahl kann durch Prüfung nach DIN EN ISO 12572, insbesondere nach DIN EN ISO 12572:2001-09, bestimmt werden. Sie gibt an, um welchen Faktor das betreffende Material gegenüber Wasserdampf dichter ist als eine gleich dicke, ruhende Luftschicht. Je größer die µ-Zahl, desto dampfdichter ist ein Werkstoff. Üblicherweise wird die Wasserdampdiffusionswiderstandszahl eines Stoffes im trockenen Zustand bestimmt. Zum Beispiel weist eine Spanplatte im trockenen Zustand eine Wasserdampdiffusionswiderstandszahl von 50 auf. Eine OSB-Platte hingegen weist im trockenen Zustand normalerweise eine Wasserdampdiffusionswiderstandszahl von 200 auf.

Das erfindungsgemäße Verfahren zur Herstellung von Laminaten enthaltend mindestens eine Trägerschicht und eine weitere Schicht, umfassend:
a. Herstellen eines Imprägnats durch Tränken eines Basispapiers mit einer Zusammensetzung, die ein Kunstharz enthält,
b. Bereitstellen einer Schichtung umfassend eine Trägerschicht und ein Imprägnat durch Aufbringen des Imprägnats auf die Trägerschicht, und
c. Heißpressen der bereitgestellten Schichtung,
wobei ein Härter für das Kunstharz verwendet wird, der beim Heißpressen durch Hydrolyse mindestens eine Säure freisetzt, und die Trägerschicht eine Wasserdampfdiffusionswiderstandszahl gemäß Prüfung nach DIN EN ISO 12572 von mindestens 250 aufweist.

Überraschenderweise wurde festgestellt, dass im erfindungsgemäßen Verfahren durch den Einsatz eines Härters für das Kunstharz, der beim Heißpressen durch Hydrolyse mindestens eine Säure freisetzt, die Presszeiten gegenüber den im Stand der Technik üblichen Presszeiten erheblich verkürzt werden können. Ohne an eine wissenschaftliche Theorie gebunden sein zu wollen, scheint sich diese überraschende Wirkung dadurch erklären zu lassen, dass der Säure-freisetzende Härter den beim Heißpressen entstehenden Wasserdampf bindet.

Wie eingangs erläutert, sind Kunstharze dem Fachmann grundsätzlich bekannt. Kunstharze sind beispielsweise in Römpps Chemie-Lexikon, 7.Auflage, Frankh'sche Verlagshandlung Stuttgart, 1973, Seite 1893 beschrieben. Eine speziell für Laminate wichtige Gruppe der Kunstharze stellen Kondensatharze dar. Diese härten durch Kondensationsreaktionen aus, bei denen oft Wasser abgespalten wird. Zu den Kondensatharzen zählen zum Beispiel Phenolformaldehydharze.

Phenolformaldehydharze können durch Kondensation von Phenol oder einem Phenolderivat mit einer Carbonylverbindung erhalten werden. Häufige Ausgangsstoffe für Phenolformaldehydharze sind beispielsweise Phenol und Formaldehyd (als Carbonylverbindung). Phenolformaldehydharze können in einem zweischrittigen Verfahren erhalten werden. Dabei kann in einem ersten Schritt eine Vorkondensation des Phenolderivats mit der Carbonylverbindung erfolgen. In einem zweiten Schritt, oft auch als Aushärtung bezeichnet, kann das Phenolformaldehydharz dann durchgehend vernetzt werden.

Ebenfalls zu den Kondensatharzen zählen Aminoplastharze. Aminoplastharze sind dem Fachmann bekannt und z.B. in "Ullmanns Enzyklopädie der technischen Chemie", 4. Auflage, Band 7, S. 403ff. beschrieben. Aminoplastharze können durch Kondensation einer Amino-, Imino oder Amidgruppen enthaltenden Komponente mit einer Carbonylverbindung erhalten werden. Häufige Ausgangsmaterialien für Aminoplastharze sind beispielsweise Harnstoff und/oder Melamin (als Aminogruppen enthaltende Komponente) und Formaldehyd (als Carbonylverbindung). In letzterem Fall wird die Aminogruppen enthaltende Komponente zumeist in einem ersten Schritt mit der Carbonylverbindung bis zu einem bestimmten Grad vorkondensiert. Je nachdem ob im ersten Schritt z.B. nur Melamin oder nur Harnstoff als Aminogruppen enthaltende Komponente eingesetzt wird, erhält man ein sogenanntes Melaminharz oder ein Harnstoffharz. Derartige Melamin- und/oder Harnstoffharze können insbesondere die Hauptbestandteile von Aminoplastharzen bilden. In einem zweiten Schritt, oft auch als Aushärtung bezeichnet, kann das Aminoplastharz dann durchgehend vernetzt werden. Harze, die aus Harnstoff und Formaldehyd gebildet werden, bezeichnet man auch als Harnstoffformaldehydharze. Harze, die aus Melamin und Formaldehyd gebildet werden, bezeichnet man als Melaminformaldehydharz.

Wenn hier oder an anderer Stelle von Aminoplastzharzen die Rede ist, dann sind damit auch Aminoplastharzzusammensetzungen gemeint. Aminoplastharze und/oder Aminoplastharzzusammensetzungen können auch Wasser enthalten.

Im erfindungsgemäßen Verfahren wird eine Schichtung bereitgestellt. Vorzugsweise besteht eine Schichtung aus zwei oder mehr Schichten. Die Schichten können insbesondere gleich sein. Alternativ können die Schichten voneinander verschieden sein. Vorteilhafterweise haben benachbarte Schichten in einer Schichtung unmittelbaren Kontakt. Die vorhandenen Kanten der einzelnen Schichten können insbesondere in einer Schichtung auf eine bestimmte Art, beispielsweise parallel zueinander, ausgerichtet sein. Vorzugsweise sind die Bestandteile einer Schichtung noch nicht miteinander verpresst.

Die Schichten, die Bestandteil der Schichtung werden sollen, können vor dem Auftragen auf die Trägerschicht mit einer Zusammensetzung, die ein Kunstharz enthält, getränkt werden. Derartige getränkte Schichten werden auch als Imprägnate bezeichnet. Imprägnate werden beispielsweise von Papieren wie Overlays, Underlays und/oder Dekorpapieren durch Tränken mit einer Zusammensetzung, die ein Kunstharz enthält, erzeugt.

Die Trägerschicht im erfindungsgemäßen Verfahren weist eine Wasserdampfdiffusionswiderstandszahl gemäß Prüfung nach DIN EN ISO 12572 von mindestens 250, vorzugsweise mindestens 500, weiter bevorzugt mindestens 1000, auf. Weiter bevorzugt weist die Trägerschicht im erfindungsgemäßen Verfahren eine Wasserdampfdiffusionswiderstandszahl gemäß Prüfung nach DIN EN ISO 12572 von mindestens 2000 auf.

Das erfindungsgemäße Verfahren ist besonders zur Herstellung von beschichteten Kompaktplatten geeignet. Insbesondere können mit dem erfindungsgemäßen Verfahren beschichtete Kompaktplatten in einem zweistufigen Verfahren hergestellt werden.

Kompaktplatten bestehen üblicherweise aus mehreren mit Phenolformaldehydharz getränkten Natronkraftpapieren. Diese werden miteinander unter Temperatur- und/oder unter Druckeinwirkung verbunden. Dadurch härtet das Harz aus und die Natronkraftpapiere verkleben miteinander. In einer Kompaktplatte können bis zu 20 Natronkraftpapiere enthalten sein. Kompaktplatten können eine Wasserdampfdiffusionswiderstandszahl gemäß Prüfung nach DIN EN ISO 12572 von bis zu 17000 aufweisen. Bevorzugt weisen Kompaktplatten eine Dicke von 2 mm und mehr auf. Kompaktplatten können gemäß den Anforderungen der DIN EN 438, insbesondere gemäß DIN EN 438-4, dabei insbesondere gemäß DIN EN 483-4:2005-04, definiert sein.

Natronkraftpapiere können zu bis zu 100% aus Zellstofffasern bestehen. Natronkraftpapiere können eine sehr hohe Festigkeit aufweisen. Natronkraftpapiere können insbesondere auch als Kraftpapiere oder als Kernlagen bezeichnet werden.

Erfindungsgemäß wird ein Härter für das Kunstharz verwendet, der beim Heißpressen durch Hydrolyse mindestens eine Säure freisetzt.

Hydrolyse im Sinne der Erfindung kann insbesondere die Spaltung einer (bio)chemischen Verbindung durch Reaktion mit Wasser bedeuten. Insbesondere kann dabei formal ein Wasserstoffatom an das eine Spaltstück und der verbleibende Hydroxylrest an das andere Spaltstück abgegeben werden.

Gemäß einer bevorzugten Ausführungsform der Erfindung trägt die Freisetzung der Säure zur Härtung des Kunstharzes bei. Dies kann insbesondere dann der Fall sein, wenn das Kunstharz durch Säurekatalyse ausgehärtet werden kann. Dies trägt dazu bei, die Presszeiten zu verringern.

Vorteilhafterweise setzt der Härter im erfindungsgemäßen Verfahren in Gegenwart von Wasser und/oder bei Wärmeeinwirkung mindestens eine Säure frei. Besonders bevorzugt setzt der Härter in Gegenwart von Wasser und bei Wärmeeinwirkung eine Säure frei. Auf diese Weise kann gezielt gesteuert werden, unter welchen Bedingungen der Härter die mindestens eine Säure freisetzt. Dies erlaubt, eine gute Kontrolle über das Verfahren.

In einer bevorzugten Ausgestaltungsform des erfindungsgemäßen Verfahrens entsteht die beim Heißpressen freigesetzte mindestens eine Säure durch Reaktion des Härters mit Wasserdampf. Dies erlaubt eine dauerhafte Bindung des entstehenden Wasserdampfes beim Heißpressen. Dadurch wird die Blasenbildung auf der Oberfläche des Laminats besonders effektiv unterdrückt.

In Einsatzversuchen wurde gefunden, dass es im erfindungsgemäßen Verfahren insbesondere zweckmäßig ist, wenn die Presszeit beim Heißpressen weniger als 120 Sekunden beträgt. Insbesondere hat es sich als vorteilhaft erwiesen, wenn im erfindungsgemäßen Verfahren die Presszeit beim Heißpressen weniger als 110 Sekunden, bevorzugt weniger als 100 Sekunden, noch bevorzugter weniger als 90 Sekunden, beträgt. Am bevorzugtesten ist eine Presszeit beim Heißpressen von weniger als 85 Sekunden. Derartige Presszeiten stellen einen optimalen Kompromiss zwischen einem Produkt mit einer glatten, blasenfreien Oberfläche und einer besonders wirtschaftlichen Durchführung des Verfahrens dar.

Geeignete Temperaturbereiche für das Heißpressen im erfindungsgemäßen Verfahren sind insbesondere Temperaturen von 110 °C bis 200 °C, bevorzugt von 120 °C bis 190 °C, noch bevorzugt von 130 °C bis 180 °C. Das Heißpressen im erfindungsgemäßen Verfahren kann auch bei einer Temperatur von 140 °C bis 170 °C durchgeführt werden. Bei Temperaturen in diesen Bereichen wird eine besonders glatte Oberfläche des Laminats erhalten. Bei niedrigeren Temperaturen kann sich die Presszeit verlängern.

Aus ökonomischen und verfahrenstechnischen Gründen hat es sich als vorteilhaft erwiesen, wenn im erfindungsgemäßen Verfahren beim Heißpressen ein Pressdruck von 1 bis 90 bar, vorzugsweise von 10 bis 80 bar, noch bevorzugt von 20 bis 70 bar verwendet wird. Derartige Drücke stellen eine besonders gute Verklebung der Schichten des Laminats miteinander sicher. Zudem kann mit einem solchen Pressdruck die Blasenbildung weiter minimiert werden.

Für viele Anwendungen ist es besonders praxisgerecht, wenn im erfindungsgemäßen Verfahren die Menge an Säure-freisetzendem Härter 0,5 bis 30 Gew.%, bevorzugt 0,5 bis 20 Gew.%, weiter bevorzugt 1 bis 15 Gew.%, noch weiter bevorzugt 1 bis 10 Gew.%, bezogen auf die Gesamtmasse an Kunstharz und Säure-freisetzendem Härter, beträgt. Am bevorzugtesten beträgt die Menge an Säure-freisetzendem Härter im erfindungsgemäßen Verfahren 1 bis 5 Gew.%, bezogen auf die Gesamtmasse an Kunstharz und Säure-freisetzendem Härter. In praktischen Versuchen wurde gefunden, dass die Verwendung von weniger als 0,5 Gew.% des Säure-freisetzenden Härters bei im erfindungsgemäßen Verfahren typischen Presszeiten zu Laminaten mit Blasen an der Oberfläche führt. Die Verwendung von mehr als 30 Gew.% des Säure-freisetzenden Härters hat sich hingegen als ökonomisch unvorteilhaft erwiesen.

Gemäß einer bevorzugten Ausführungsform weist die im erfindungsgemäßen Verfahren freigesetzte Säure ein Molekulargewicht von 40 g/mol bis 500 g/mol, bevorzugt von 40 g/mol bis 300 g/mol auf. Eine Säure in diesem Molekulargewichtsbereich erlaubt eine effektive Härtung des Kunstharzes.

Vorteilhafterweise ist im erfindungsgemäßen Verfahren die durch den Härter freigesetzte mindestens eine Säure eine Brönsted-Säure mit einem pKa von kleiner als 8, bevorzugt kleiner als 7, noch bevorzugt kleiner als 6. Am bevorzugtesten ist die im erfindungsgemäßen Verfahren durch den Härter freigesetzte mindestens eine Säure eine Brönsted-Säure mit einem pKa von 3,5 bis 5,5. Die Freisetzung einer Brönsted-Säure lässt sich im erfindungsgemäßen Verfahren besonders gut kontrollieren. Bei einem pKa der Brönsted-Säure von 8 oder größer können, abhängig vom verwendeten Kunstharz, Nebenreaktionen auftreten.

Vorteilhafterweise enthält die im erfindungsgemäßen Verfahren freigesetzte Säure eine Carbonsäure oder stellt eine solche dar. Vorzugsweise weist die freigesetzte Carbonsäure 2 bis 20 Kohlenstoffatome, weiter bevorzugt 2 bis 12 Kohlenstoffatome, auf. Gemäß einer weiteren Ausführungsform enthält oder besteht die im erfindungsgemäßen Verfahren freigesetzte Säure aus einer Hydroxycarbonsäure. Vorzugsweise weist die freigesetzte Hydroxycarbonsäure 2 bis 20 Kohlenstoffatome, weiter bevorzugt 2 bis 10 Kohlenstoffatome, auf. In einer weiteren Ausgestaltungsform enthält die im erfindungsgemäßen Verfahren freigesetzte Säure eine Carbonsäure und eine Hydroxycarbonsäure oder besteht hieraus. Gemäß dieser Ausgestaltungsform des Verfahrens weist die Carbonsäure 2 bis 20 Kohlenstoffatome, weiter bevorzugt 2 bis 12 Kohlenstoffatome, und die Hydroxycarbonsäure 2 bis 20 Kohlenstoffatome, weiter bevorzugt 2 bis 10 Kohlenstoffatome, auf.

Als Säure-freisetzende Härter können im erfindungsgemäßen Verfahren grundsätzlich die verschiedensten Substanzen eingesetzt werden, die eine Säure freisetzen. Zweckmäßig ist es insbesondere, wenn als Säure-freisetzender Härter ein Härter verwendet wird, der ein Säureanhydrid und/oder einen Ester, vorzugsweise ein Lacton, enthält. Der Einsatz eines Härters, der ein Säureanhydrid und/oder ein Lacton enthält, erlaubt es, die Blasenbildung an der Oberfläche der Laminate bei im erfindungsgemäßen Verfahren typischen Presszeiten gut zu unterdrücken.

Als Ester wird vorzugsweise ein Carbonsäureester verwendet. Vorzugsweise weist der Carbonsäureester 2 bis 30 Kohlenstoffatome, bevorzugt 2 bis 15 Kohlenstoffatome, auf. Beispiele für Ester sind Ameisensäuremethylester, Essigsäureethylester, Propansäureethylester, Propansäurepropylester, Benzoesäurepropylester. Insbesondere können auch aktivierte Ester wie beispielsweise Phenylester verwendet werden.

In einer weiter bevorzugten Ausführungsform des erfindungsgemäßen Verfahrens enthält der Säure-freisetzende Härter ein Lacton oder besteht hieraus. Dadurch lässt sich die Blasenbildung an der Oberfläche der Laminate bei im erfindungsgemäßen Verfahren typischen Presszeiten sehr wirksam unterdrücken.

Als Lacton wird vorzugsweise ein intramolekularer Ester einer Hydroxycarbonsäure verwendet. Vorzugsweise weist das Lacton 3 bis 15 Kohlenstoffatome, bevorzugt 3 bis 8 Kohlenstoffatome, auf.

In einer besonders bevorzugten Ausführungsform des erfindungsgemäßen Verfahrens ist das Lacton Gammabutyrolacton und/oder Epsiloncaprolacton. Es wurde gefunden, dass sich durch den Einsatz von Gammabutyrolacton und/oder Epsiloncaprolacton die Blasenbildung an der Oberfläche des Laminats bei im erfindungsgemäßen Verfahren typischen Presszeiten besonders wirksam unterdrücken lässt.

Als Säureanhydrid wird vorteilhafterweise ein organisches Säureanhydrid eingesetzt. Vorzugsweise weist das Säureanhydrid 2 bis 15 Kohlenstoffatome, weiter bevorzugt 4 bis 10 Kohlenstoffatome, auf.

In einer weiteren bevorzugten Ausgestaltungsform des erfindungsgemäßen Verfahrens ist das Säureanhydrid, das der Säure-freisetzende Härter enthalten kann, ausgewählt aus der Gruppe bestehend aus Acetanhydrid, Maleinsäureanhydrid, Bernsteinsäureanhydrid und Dilactid. In einer weiteren Ausgestaltungsform des erfindungsgemäßen Verfahrens ist das Säureanhydrid eine Mischung aller oder eines Teils der vorgenannten Anhydride. In einer weiteren Ausgestaltungsform des Verfahrens ist das Säureanhydrid ausgewählt aus der Gruppe bestehend aus Acetanhydrid, Bernsteinsäureanhydrid und Dilactid und Mischungen davon. Es wurde gefunden, dass sich bei Verwendung eines der vorgenannten Anhydride oder Mischungen aller oder eines Teils der vorgenannten Anhydride die Blasenbildung an der Oberfläche des Laminats bei im erfindungsgemäßen Verfahren typischen Presszeiten wirksam unterdrücken lässt.

Das im erfindungsgemäßen Verfahren eingesetzte Kunstharz kann insbesondere ein Aminoplastharz sein. Aminoplastharze ergeben bei der Verwendung mit einem Säure-freisetzenden Härter besonders gute Ergebnisse in Bezug auf die Blasenbildung an der Oberfläche der Laminate. Zudem haben Aminoplastharze den Vorteil, dass sie üblicherweise farblos und transparent sind. Dadurch kann sichergestellt werden, dass der optische Eindruck des unter Umständen eingesetzten Dekorpapiers nicht verfälscht wird.

Vorzugsweise wird im erfindungsgemäßen Verfahren das in Schritt a. getränkte Basispapier vor dem Aufbringen auf die Trägerschicht in Schritt b. getrocknet. Dabei kann das Basispapier insbesondere auf eine Restfeuchte von 3 bis 15%, bevorzugt von 4 bis 12%, noch bevorzugter von 5 bis 10% getrocknet werden. Unter Restfeuchte versteht der Fachmann den Wassergehalt des Papiers nach dem Trocknen. Standardmethoden zur Bestimmung der Restfeuchte sind dem Fachmann bekannt. Beispielsweise kann die Restfeuchte mit geeigneten Feuchtemessgeräten oder gravimetrisch ermittelt werden.

Gemäß einer Ausführungsform der Erfindung wird in Schritt a. des erfindungsgemäßen Verfahrens als getränktes Basispapier ein Underlaypapier eingesetzt. Underlays können insbesondere als Barriere zwischen der Trägerschicht und dem Dekorpapier wirken und eine chemische Beeinflussung zwischen den Harzbestandteilen von Trägerschicht und Dekorpapier verhindern. Es hat sich herausgestellt, dass durch den Einsatz eines Underlays besonders gleichmäßige Oberflächen der Laminate erhalten werden können.

Gemäß einer weiteren bevorzugten Ausführungsform wird im erfindungsgemäßen Verfahren in einem zusätzlichen Schritt nach Schritt b., insbesondere zwischen den Schritten b. und c., eine oder mehrere Schichten auf die in Schritt b. erhaltene Schichtung aufgebracht. Dadurch können die Eigenschaften des Laminats, besonders die optischen Eigenschaften, gezielt beeinflusst werden.

In einer besonders bevorzugten Ausführungsform wird im erfindungsgemäßen Verfahren in einem zusätzlichen Schritt nach Schritt b., insbesondere zwischen den Schritten b. und c., ein Dekorpapier und/oder eine Deckschicht, insbesondere ein Overlaypapier, auf die Schichtung aufgebracht. Mit dem Dekorpapier können die optischen Eigenschaften des Laminats gezielt beeinflusst werden. Das Dekorpapier kann bedruckt sein. Die bedruckte Oberfläche des Dekorpapiers kann dabei wesentlich das Aussehen des Laminats bestimmen. Beispielsweise kann durch einen geeigneten Aufdruck auf dem Dekorpapier eine Holzoberfläche imitiert werden.

Beispiele für eine Deckschicht sind Overlays oder Flüssigoverlays. Ein Overlay ist ein vorzugsweise im Wesentlichen transparentes Papier mit einem hohen Harzaufnahmevermögen. Ein derartiges Overlay kann insbesondere auch als Overlaypapier bezeichnet werden. Overlays können insbesondere zum Schutz des Druckbildes von bedruckten Dekorpapieren verwendet werden. Sie können beispielsweise auch zur Verbesserung der Abriebbeständigkeit eingesetzt werden. Vorzugsweise wird ein Overlay als oberste Schicht auf das Laminat aufgebracht. Ein weiteres Beispiel für eine Deckschicht ist ein Flüssigoverlay. Flüssigoverlays können vorteilhafterweise aus einem Harz, beispielsweise einem Aminoplastharz, bestehen, das Partikel, insbesondere abrasive Partikel, enthalten kann. Ein Flüssigoverlay wird vorzugsweise als oberste Schicht auf das Laminat aufgebracht. Im erfindungsgemäßen Verfahren eingesetzte Overlaypapiere können insbesondere ein Flächengewicht von 15 bis 80 g/m² aufweisen. Das Flächengewicht wird auch als Grammatur bezeichnet.

Bevorzugt kommen im erfindungsgemäßen Verfahren Trägerschichten mit einer Dicke von größer als 2 mm, noch bevorzugt größer als 3 mm, weiter bevorzugt größer als 3,5 mm zum Einsatz.

In einer weiteren Ausgestaltungsform des erfindungsgemäßen Verfahrens umfasst die Trägerschicht eine Kompaktplatte oder stellt eine solche dar. Praktische Versuche haben gezeigt, dass das erfindungsgemäße Verfahren gerade bei Kompaktplatten die Blasenbildung an der Oberfläche effizient unterdrücken kann. Insbesondere können mit dem erfindungsgemäßen Verfahren beschichtete Kompaktplatten in einem zweistufigen Verfahren hergestellt werden.

In einer weiteren Ausführungsform des erfindungsgemäßen Verfahrens umfasst die Trägerschicht ein oder mehrere Natronkraftpapiere, die mit einem Kunstharz, ausgewählt aus der Gruppe bestehend aus Melaminformaldehydharz, Harstoffformaldehydharz, Phenolformaldehydharz und Mischungen davon, getränkt wurden.

Neben den Hauptbestandteilen Phenolharz und oder Aminoplastharz kann die im erfindungsgemäßen Verfahren eingesetzte ein Kunstharz enthaltende Zusammensetzung auch weitere Bestandteile wie Netzmittel, Trennmittel und/oder Emulsionen von vernetzbaren Polymeren, wie z.B. Acrylpolymeren enthalten. Auch ist es denkbar, der ein Kunstharz enthaltenden Zusammensetzung Härter, beispielsweise den Säure-freisetzenden Härter und/oder einen weiteren, speziell für das eingesetzte Kunstharz konzipierten Härter zuzusetzen. Die ein Kunstharz enthaltende Zusammensetzung kann auch als Leimflotte oder Kunstharzflotte bezeichnet werden.

Vorzugsweise beträgt die Beharzung des Imprägnats im erfindungsgemäßen Verfahren von 90 % bis 130 %, bevorzugt von 100 % bis 120 %, noch bevorzugt von 105 % bis 115 %. Unter Beharzung kann insbesondere das Verhältnis der Menge der ein Kunstharz enthaltenden Zusammensetzung, die das zu imprägnierende Papier aufgenommen hat, zum Gewicht des zu imprägnierenden Papiers verstanden werden. Die Beharzung kann der Fachmann z.B. durch einfaches Wiegen bestimmen.

Im erfindungsgemäßen Verfahren wird die Beharzung zur Herstellung der Imprägnate vorteilhafterweise dadurch erreicht, dass die betreffende Schicht, beispielsweise ein Basispapier, in ein Bad, welches die ein Kunstharz enthaltende Zusammensetzung enthält, getaucht wird. Auf diese Weise kann die Schicht mit der ein Kunstharz enthaltenden Zusammensetzung gesättigt werden. Ein eventueller Überschuss der Zusammensetzung kann mittels Rollen oder Abstreifern entfernt werden.

Anschließend kann das Imprägnat in einem Heizkanal getrocknet werden. Die Trocknung kann insbesondere durch einen Heißluftstrom erfolgen. Der Heißluftstrom kann eine Temperatur von 130 °C bis 200 °C aufweisen.

Im erfindungsgemäßen Verfahren kann das Laminat vorzugsweise durch Heißpressen in einer Kurztaktpresse erhalten werden. In einer weiteren Ausführungsform des erfindungsgemäßen Verfahrens kann das Laminat durch Heißpressen in einer Mehretagenpresse erhalten werden.

Im Anschluss an das Heißpressen kann das erhaltene Laminat im erfindungsgemäßen Verfahren insbesondere weiter bearbeitet werden. Beispielsweise kann überstehendes Material entfernt werden. Zudem können die Kanten des erhaltenen Laminats angepasst werden. Schließlich kann bei einseitigen Laminaten die Rückseite geschliffen werden.

Im erfindungsgemäßen Verfahren können die ein Kunstharz enthaltende Zusammensetzung und der Säure-freisetzende Härter für das Kunstharz auf unterschiedliche Art und Weise zusammengeführt werden.

Gemäß einer Ausgestaltungsform des erfindungsgemäßen Verfahrens ist der Säure-freisetzende Härter in der Zusammensetzung, die ein Kunstharz enthält, enthalten. Dadurch wird eine gute Durchmischung von Kunstharz und Säure-freisetzendem Härter erreicht.

Gemäß einer weiteren Ausgestaltungsform des erfindungsgemäßen Verfahrens wird der Säure-freisetzende Härter in einem zusätzlichen Schritt auf das imprägnierte Basispapier aufgetragen. Alternativ kann der Säure-freisetzende Härter auch in einem zusätzlichen Schritt auf die Trägerschicht aufgetragen werden. Weiterhin kann der Säure-freisetzende Härter insbesondere auf das Basispapier und auf die Trägerschicht aufgetragen werden. Bevorzugt wird der Säure-freisetzende Härter auf das imprägnierte Basispapier und/oder auf die Trägerschicht aufgetragen, bevor die Schichtung in Schritt b. bereitgestellt wird. Ferner kann der Säure-freisetzende Härter auf die Schicht, auf die das Basispapier aufgebracht wird, aufgetragen werden.

Das erfindungsgemäße Verfahren kann insbesondere zur Herstellung von einseitig beklebten Laminaten eingesetzt werden. Das erfindungsgemäße Verfahren kann auch zur Herstellung von beidseitig beklebten Laminaten eingesetzt werden.

Weiterhin betrifft die Erfindung Laminate, die nach einem erfindungsgemäßen Verfahren hergestellt wurden.

Zudem betrifft die Erfindung die Verwendung eines Härters für Kunstharze, der durch Hydrolyse mindestens eine Säure bildet, in einem Verfahren zur Herstellung von Laminaten, die eine Trägerschicht mit einer Wasserdampfdiffusionswiderstandszahl gemäß Prüfung nach DIN EN ISO 12572 von mindestens 250 umfassen.

Dabei gilt für die Merkmale der erfindungsgemäßen Verwendung das oben zu den Merkmalen des erfindungsgemäßen Verfahrens ausgeführte entsprechend.

Insbesondere weist in einer bevorzugten Ausführungsform der erfindungsgemäßen Verwendung die Trägerschicht eine Wasserdampfdiffusionswiderstandszahl gemäß Prüfung nach DIN EN ISO 12572 von mindestens 500, insbesondere mindestens 1000, auf. Weiter bevorzugt weist die Trägerschicht in der erfindungsgemäßen Verwendung eine Wasserdampfdiffusionswiderstandszahl gemäß Prüfung nach DIN EN ISO 12572 von mindestens 2000 auf.

Vorteilhafterweise enthält das Laminat in der erfindungsgemäßen Verwendung eine Kompaktplatte.

In einer Ausführungsform der erfindungsgemäßen Verwendung enthält der Säure-freisetzende Härter ein Säureanhydrid. In einer weiteren Ausführungsform der erfindungsgemäßen Verwendung enthält der Säure-freisetzende Härter ein Lacton. In einer weiteren Ausführungsform der erfindungsgemäßen Verwendung enthält der Säure-freisetzende Härter ein Säureanhydrid und ein Lacton.

Vorteilhafterweise ist das Kunstharz in der erfindungsgemäßen Verwendung ein Aminoplastharz.

In einer bevorzugten Ausführungsform der erfindungsgemäßen Verwendung ist das Verfahren das oben erläuterte erfindungsgemäße Verfahren.

Das Prinzip der Erfindung soll im Folgenden an einem Beispiel näher erläutert werden.

### Beispiel:

Folgende Chemikalien wurden verwendet:
Melaminharz (Prefere 700690L, MetaDynea); Härter Melamin (Madurit MH 836, Ineos); Netzmittel (Hypersal XT 782, Ineos); Trennmittel (Madurit TM 3759, Ineos); Plastifizierungsmittel (Plextol BV411, Synthomer); Gammabutyrolacton (INCHEM Chemie Handel GmbH).

Zur Herstellung eines Imprägnats wurde eine Aminoplastharzflotte mit folgender Zusammensetzung hergestellt:

**Tabelle 1: Zusammensetzung Aminoplastharzflotte**

| **Substanz** | **Gew.%** |
|---|---|
| Melaminharz | 80,5 |
| Wasser | 12,0 |
| Härter Melamin | 0,5 |
| Netz-, Trenn- und Plastifizierungsmittel | 5,0 |
| Gammabutyrolacton | 2,0 |

Der Festharzanteil betrug 48,4 %, die Viskosität bei 20 °C 19,24 mPas und die Trübungszeit 210 Sekunden.

Als Basispapier wurde ein Underlaypapier mit einer Rohpapiergrammatur von 150 g/m² verwendet. Die Aminoplastharzflotte wurde in eine Imprägnierwanne gegeben und das Basispapier wurde durch Ziehen des Basispapiers durch diese Wanne getränkt. Anschließend wurde das so erhaltene Imprägnat getrocknet. Das getrocknete Imprägnat wies ein Tränkgewicht von 335 g/m², eine Restfeuchte von ca. 6 % und eine Beharzung von ca. 110 % auf.

Anschließend wurde das Imprägnat auf eine Kompaktplatte mit einer Dicke von 4,8 mm aufgebracht. Auf die so erhaltene Schichtung wurde ein Dekorpapier aufgebracht. Die so erhaltene Schichtung bestehend aus Trägerschicht, Imprägnat und Dekorpapier wurde bei einem Pressdruck von 45 kg/cm², einer Presstemperatur von 180 °C mit einer Presszeit von 80 Sekunden verpresst. Dabei zeigte sich keine Blasenbildung an der Oberfläche der erhaltenen beschichteten Kompaktplatte.

## Patentansprüche

1. Verfahren zur Herstellung eines Laminats, enthaltend mindestens eine Trägerschicht und eine weitere Schicht, umfassend:
a. Herstellen eines Imprägnats durch Tränken eines Basispapiers mit einer Zusammensetzung, die ein Kunstharz enthält,
b. Bereitstellen einer Schichtung umfassend eine Trägerschicht und ein Imprägnat durch Aufbringen des Imprägnats auf die Trägerschicht, und
c. Heißpressen der bereitgestellten Schichtung,
**dadurch gekennzeichnet, dass** ein Härter für das Kunstharz verwendet wird, der beim Heißpressen durch Hydrolyse mindestens eine Säure freisetzt, und die Trägerschicht eine Wasserdampfdiffusionswiderstandszahl gemäß Prüfung nach DIN EN ISO 12572 von mindestens 250 aufweist.

2. Verfahren nach Anspruch 1, **dadurch gekennzeichnet, dass** die Freisetzung der Säure zur Härtung des Kunstharzes beiträgt.

3. Verfahren nach einem der vorstehenden Ansprüche, **dadurch gekennzeichnet, dass** der Härter in Gegenwart von Wasser und/oder bei Wärmeeinwirkung mindestens eine Säure freisetzt.

4. Verfahren nach einem der vorstehenden Ansprüche, **dadurch gekennzeichnet, dass** die beim Heißpressen freigesetzte mindestens eine Säure durch Reaktion des Härters mit Wasserdampf gebildet wird.

5. Verfahren nach einem der vorstehenden Ansprüche, **dadurch gekennzeichnet, dass** die Presszeit beim Heißpressen weniger als 120 Sekunden, insbesondere weniger als 90 Sekunden beträgt.

6. Verfahren nach einem der vorstehenden Ansprüche, **dadurch gekennzeichnet, dass** das Heißpressen bei einer Temperatur von 110 °C bis 200 °C, insbesondere von 120 °C bis 190 °C oder von 130 °C bis 180 °C durchgeführt wird.

7. Verfahren nach einem der vorstehenden Ansprüche, **dadurch gekennzeichnet, dass** das Heißpressen bei einem Druck von 1 bis 90 bar, insbesondere von 10 bis 80 oder 20 bis 70 bar, durchgeführt wird.

8. Verfahren nach einem der vorstehenden Ansprüche, **dadurch gekennzeichnet, dass** die Menge an Säure-freisetzendem Härter 0,5 bis 30 Gew.%, insbesondere 0,5 bis 20 Gew.%, bezogen auf die Gesamtmasse an Kunstharz und Härter, beträgt.

9. Verfahren nach einem der vorstehenden Ansprüche, **dadurch gekennzeichnet, dass** die freigesetzte Säure ein Molekulargewicht von 40 g/mol bis 500 g/mol, insbesondere von 40 g/mol bis 300 g/mol, aufweist.

10. Verfahren nach einem der vorstehenden Ansprüche, **dadurch gekennzeichnet, dass** die durch den Härter freigesetzte mindestens eine Säure eine Brönsted-Säure mit einem pKa von kleiner als 8, insbesondere kleiner als 7, ist.

11. Verfahren nach einem der vorstehenden Ansprüche, **dadurch gekennzeichnet, dass** als Säure-freisetzender Härter ein Härter verwendet wird, der ein Säureanhydrid und/oder einen Ester, insbesondere ein Lacton, enthält.

12. Verfahren nach Anspruch 11, **dadurch gekennzeichnet, dass** das Lacton Gammabutyrolacton und/oder Epsiloncaprolacton ist.

13. Verfahren nach Anspruch 11 oder 12, **dadurch gekennzeichnet, dass** das Säureanhydrid ausgewählt ist aus der Gruppe bestehend aus Acetanhydrid, Maleinsäureanhydrid, Bernsteinsäureanhydrid und Dilactid.

14. Verfahren nach einem der vorstehenden Ansprüche, **dadurch gekennzeichnet, dass** das Kunstharz ein Aminoplastharz ist.

15. Verfahren nach einem der vorstehenden Ansprüche, **dadurch gekennzeichnet, dass** das Basispapier ein Underlaypapier ist.

16. Verfahren nach einem der vorstehenden Ansprüche, **dadurch gekennzeichnet, dass** in einem zusätzlichen Schritt nach Schritt b. auf die in Schritt b. bereitgestellte Schichtung zusätzlich ein Dekorpapier und/oder eine Deckschicht, insbesondere ein Overlaypapier, aufgebracht wird.

17. Verfahren nach einem der vorstehenden Ansprüche, **dadurch gekennzeichnet, dass** die Trägerschicht eine Kompaktplatte umfasst.

18. Verfahren nach einem der Ansprüche 1 bis 16, **dadurch gekennzeichnet, dass** die Trägerschicht ein oder mehrere Natronkraftpapiere umfasst, die mit einem Kunstharz, ausgewählt aus der Gruppe bestehend aus Melaminformaldehydharz, Harnstoffformaldehydharz, Phenolformaldehydharz und Mischungen davon, getränkt wurden.

19. Verfahren nach einem der vorstehenden Ansprüche, **dadurch gekennzeichnet, dass** der Säure-freisetzende Härter in der Zusammensetzung, die ein Kunstharz enthält, enthalten ist.

20. Verfahren nach einem der vorstehenden Ansprüche, **dadurch gekennzeichnet, dass** der Säure-freisetzende Härter in einem zusätzlichen Schritt auf das imprägnierte Basispapier und/oder auf die Trägerschicht aufgetragen wird.

21. Laminat erhältlich nach einem Verfahren gemäß einem der Ansprüche 1 bis 20.

22. Verwendung eines Härters für Kunstharze, der durch Hydrolyse mindestens eine Säure bildet, in einem Verfahren zur Herstellung von Laminaten, die eine Trägerschicht mit einer Wasserdampfdiffusionswiderstandszahl gemäß Prüfung nach DIN EN ISO 12572 von mindestens 250 umfassen, **dadurch gekennzeichnet, dass** das Verfahren ein Verfahren gemäß einem der Ansprüche 1 bis 20 ist.

23. Verwendung nach Anspruch 22, **dadurch gekennzeichnet, dass** das Laminat eine Kompaktplatte enthält.

24. Verwendung nach einem der Ansprüche 22 oder 23, **dadurch gekennzeichnet, dass** der Säure-freisetzende Härter ein Säureanhydrid und/oder ein Lacton enthält.

25. Verwendung nach einem der Ansprüche 22 bis 24, **dadurch gekennzeichnet, dass** das Kunstharz ein Aminoplastharz ist.

## Claims

1. Method for producing a laminate, containing at least one carrier layer and a further layer, comprising:
a. producing an impregnate by impregnating a base paper with a composition containing a synthetic resin,
b. preparing a layering comprising a carrier layer and an impregnate by applying the impregnate to the carrier layer, and
c. hot-pressing the prepared layering,
**characterised in that** a hardener is used for the synthetic resin, which releases at least one acid by hydrolysis during hot-pressing, and the carrier layer has a water vapour diffusion resistance number when tested according to DIN EN ISO 12572 of at least 250.

2. Method according to claim 1, **characterised in that** the release of the acid contributes to the hardening of the synthetic resin.

3. Method according to any one of the preceding claims, **characterised in that** the hardener releases at least one acid in the presence of water and/or under the effect of heat.

4. Method according to any of the preceding claims, **characterised in that** the at least one acid released during hot-pressing is formed by a reaction of the hardener with water vapour.

5. Method according to any of the preceding claims, **characterised in that** the pressing time during hot-pressing is less than 120 seconds, in particular less than 90 seconds.

6. Method according to any of the preceding claims, **characterised in that** hot-pressing is carried out at a temperature of from 110°C to 200°C, in particular from 120°C to 190°C or from 130°C to 180°C.

7. Method according to any one of the preceding claims, **characterised in that** hot-pressing is carried out under a pressure of from 1 to 90 bar, in particular from 10 to 80 or from 20 to 70 bar.

8. Method according to any one of the preceding claims, **characterised in that** the quantity of acid-releasing hardener is from 0.5 to 30% by weight, in particular from 0.5 to 20% by weight, based on the total mass of synthetic resin and hardener.

9. Method according to any one of the preceding claims, **characterised in that** the released acid has a molecular weight of from 40 g/mol to 500 g/mol, in particular from 40 g/mol to 300 g/mol.

10. Method according to any one of the preceding claims, **characterised in that** the at least one acid released by the hardener is a Bronsted acid having a pKa of less than 8, in particular less than 7.

11. Method according to any one of the preceding claims, **characterised in that** a hardener containing an acid anhydride and/or an ester, in particular a lactone is used as the acid-releasing hardener.

12. Method according to claim 11, **characterised in that** the lactone is gamma butyrolactone and/or epsilon caprolactone.

13. Method according to claim 11 or claim 12, **characterised in that** the acid anhydride is selected from the group consisting of acetic anhydride, maleic anhydride, succinic anhydride and dilactide.

14. Method according to any one of the preceding claims, **characterised in that** the synthetic resin is an aminoplast resin.

15. Method according to any one of the preceding claims, **characterised in that** the base paper is an underlay paper.

16. Method according to any one of the preceding claims, **characterised in that** in an additional step after step b., a decor paper and/or a cover layer, in particular an overlay paper is additionally applied to the layering prepared in step b.

17. Method according to any one of the preceding claims, **characterised in that** the carrier layer comprises a compact board.

18. Method according to any one of claims 1 to 16, **characterised in that** the carrier layer comprises one or more sodium kraft papers which have been impregnated with a synthetic resin, selected from the group consisting of melamine formaldehyde resin, ureaformaldehyde resin, phenol formaldehyde resin and mixtures thereof.

19. Method according to any of the preceding claims, **characterised in that** the acid-releasing hardener is contained in the composition which contains a synthetic resin.

20. Method according to any of the preceding claims, **characterised in that** in an additional step, the acid-releasing hardener is applied to the impregnated base paper and/or to the carrier layer.

21. Laminate obtainable according to a method according to any one of claims 1 to 20.

22. Use of a hardener for synthetic resins which forms at least one acid during hydrolysis, in a method for producing laminates which comprise a carrier layer having a water vapour diffusion resistance value when tested according to DIN EN ISO 12572 of at least 250, **characterised in that** the method is a method according to any one of claims 1 to 20.

23. Use according to claim 22, **characterised in that** the laminate contains a compact board.

24. Use according to any one of claims 22 or 23, **characterised in that** the acid-releasing hardener contains an acid anhydride and/or a lactone.

25. Use according to any one of claims 22 to 24, **characterised in that** the synthetic resin is an aminoplast resin.

## Revendications

1. Procédé de fabrication d'un stratifié contenant au moins une couche de support et une autre couche, comprenant:
a. Fabrication d'un imprégné par imprégnation d'un papier de base avec une composition contenant une résine synthétique,
b. Obtention d'un agencement comprenant une couche de support et un imprégné, par application de l'imprégné sur la couche de support, et
c. Pressage à chaud de l'agencement obtenu,
**caractérisé en ce que** un durcisseur est utilisé pour la résine synthétique, lequel durcisseur libère au moins un acide lors du pressage à chaud par hydrolyse, et la couche de support présente un facteur de résistance à la diffusion de vapeur d'eau selon l'essai selon DIN EN ISO 12572 d'au moins 250.

2. Procédé selon la revendication 1, **caractérisé en ce que** la libération de l'acide contribue au durcissement de la résine synthétique.

3. Procédé selon l'une des revendications précédentes, **caractérisé en ce que** le durcisseur libère au moins un acide en présence d'eau et / ou sous l'effet de la chaleur.

4. Procédé selon l'une des revendications précédentes, **caractérisé en ce que** l'au moins un acide libéré lors du pressage à chaud est formé par réaction du durcisseur avec de la vapeur d'eau.

5. Procédé selon l'une des revendications précédentes, **caractérisé en ce que** le temps de pressage, lors du pressage à chaud, est inférieur à 120 secondes, en particulier inférieur à 90 secondes.

6. Procédé selon l'une des revendications précédentes, **caractérisé en ce que** le pressage à chaud est effectué à une température de 110 °C à 200 °C, en particulier de 120 °C à 190 °C ou de 130 °C à 180 °C.

7. Procédé selon l'une des revendications précédentes, **caractérisé en ce que** le pressage à chaud est effectué à une pression de 1 à 90 bar, en particulier de 10 à 80 ou de 20 à 70 bar.

8. Procédé selon l'une des revendications précédentes, **caractérisé en ce que** la quantité de durcisseur libérant de l'acide est de 0,5 à 30 % en poids, en particulier de 0,5 à 20 % en poids, par rapport à la masse totale de résine synthétique et durcisseur.

9. Procédé selon l'une des revendications précédentes, **caractérisé en ce que** l'acide libéré a un poids moléculaire de 40 g/mol à 500 g/mol, en particulier de 40 g/mol à 300 g/mol.

10. Procédé selon l'une des revendications précédentes, **caractérisé en ce que** l'au moins un acide libéré par le durcisseur est un acide de Bronsted ayant un pka inférieur à 8, en particulier inférieur à 7.

11. Procédé selon l'une des revendications précédentes, **caractérisé en ce que**, comme durcisseur libérant un acide, on utilise un durcisseur qui contient un anhydride acide et / ou un ester, en particulier une lactone.

12. Procédé selon la revendication 11, **caractérisé en ce que** la lactone est gamma-butyrolactone et / ou epsilon-caprolactone.

13. Procédé selon revendication 11 ou 12, **caractérisé en ce que** l'anhydride acide est choisi à partir du groupe constitué par anhydride acétique, anhydride d'acide maléique, anhydride succinique et dilactide.

14. Procédé selon l'une des revendications précédentes, **caractérisé en ce que** la résine synthétique est une résine aminoplaste.

15. Procédé selon l'une des revendications précédentes, **caractérisé en ce que** le papier de base est un papier underlay.

16. Procédé selon l'une des revendications précédentes, **caractérisé en ce que**, lors d'une étape supplémentaire, après l'étape b, un papier décoratif et / ou une couche de couverture, en particulier un papier overlay, sont appliqués sur l'agencement obtenu lors de l'étape b.

17. Procédé selon l'une des revendications précédentes, **caractérisé en ce que** la couche de support comprend une plaque compacte.

18. Procédé selon l'une des revendications 1 à 16, **caractérisé en ce que** la couche de support comprend un ou plusieurs papiers kraft à la soude, qui ont été imprégnés d'une résine synthétique, choisie à partir du groupe constitué par résine mélamine formaldéhyde, résine urée formaldéhyde, résine phénol formaldéhyde et des mélanges de celles-ci.

19. Procédé selon l'une des revendications précédentes, **caractérisé en ce que** le durcisseur libérant un acide est contenu dans la composition qui contient une résine synthétique.

20. Procédé selon l'une des revendications précédentes, **caractérisé en ce que** le durcisseur libérant un acide est appliqué sur le papier de base imprégné et / ou sur la couche de support lors d'une étape supplémentaire.

21. Stratifié pouvant être obtenu par un procédé selon l'une des revendications 1 à 20.

22. Utilisation d'un durcisseur pour résines synthétiques, qui, par hydrolyse, forme au moins un acide, dans un procédé de fabrication de stratifiés, qui comprennent une couche de support avec un facteur de résistance à la diffusion de vapeur d'eau d'au moins 250 selon l'essai selon DIN EN ISO 12572, **caractérisée en ce que** le procédé est un procédé selon l'une des revendications 1 à 20.

23. Utilisation selon la revendication 22, **caractérisée en ce que** le stratifié comprend une plaque compacte.

24. Utilisation selon l'une des revendications 22 ou 23, **caractérisée en ce que** le durcisseur libérant un acide contient un anhydride d'acide et / ou une lactone.

25. Utilisation selon l'une des revendications 22 à 24, **caractérisée en ce que** la résine synthétique est une résine aminoplaste.
